# EUROPEAN PATENT APPLICATION

(11) **EP 0 859 167 A1**
(43) Date of publication of application: **19.08.1998**
(21) Application number: 98102513.3
(22) Date of filing: 13.02.1998
(51) Int. Cl.: F16H 1/00, F16H 59/04, B60K 41/22

(54) **Auxiliary device for the gear change in a sport vehicle such as a go-kart and the like**

(30) Priority: 13.02.1997 IT PI970010
(71) Applicant: Cassotta, Carlo, 56038 Ponsacco PI (IT)
(72) Inventor: Cassotta, Carlo, 56038 Ponsacco PI (IT)
(74) Representative: Celestino, Marco

(57) **Abstract**

An auxiliary device for the gear change in a sport vehicle such as a go-kart and the like suitable for a quick gear change during the acceleration phase without the need of any speed reduction and respective method thereof. The device comprises first and second pulling means (11,12), connected respectively to manual drive means (16) and to the clutch of the vehicle, quick release means (13) interposed between the first and second pulling means, and control means (14,15) of the quick release means. The, control means (14,15) and the manual drive means (16) are connected to the gear lever (1,3). The quick release means may comprise a moving element (20) fixed to said first pulling means (11), a connection rod (22) slidingly engaging with the moving element (20) and connected to the second pulling means (12), and a locking element (15) releasably engaging with the connection rod (22) and moved by said control means (14). The release occurs at the same moment of the gear change and lets the clutch to suddenly mesh back the engine.

## Description

The present invention generally relates to the race automotive field and more precisely it relates to an auxiliary device for the gear change in a sport vehicle such as a go-kart and the like.

In some race motor vehicles, and in particular in go-karts, the gear change is carried out without using the clutch, apart from the start phase. In fact, just before the start the pilot only holds pulled a clutch lever, placed under the steering wheel, and releases it at the start. In all the other phases of the race the gear change is carried out only acting on a gear lever, normally located on the right of the steering wheel and which directly operates the gearbox. The mesh change of a gear and the successive one is determined by a synchronised movement of the accelerator pedal and the gear lever. More precisely, for being able to change gear in phase of acceleration, the pilot releases the accelerator pedal reducing the engine speed and, therefore, loosening the mesh between the gears. In this way, therefore, disengagement and mesh of the subsequently higher gear is allowed. In phase of deceleration, instead, the gear lever can normally be moved without a synchronised movement of the accelerator pedal.

Even if in the deceleration phase the gear change does not involve penalizations for the speed of the vehicle, in the acceleration phase it does, since the moment of the gear change interrupts the vehicle motion continuity. In other words, a loss of speed necessarily occurs, which a skilled pilot can try to avoid but not under certain limits. In fact, when the pilot operates the gear lever, the disengagement of the gear currently meshed is extremely hard if not impossible, unless a momentary deceleration of the engine occurs.

On the other hand, the absence of clutch controls like those used for a normal gear, such as car gear, is provided for on the go-karts just in order to increase their performances. For this reason a sporty drive is possible up to the limits of the engine capacity, which is normally rather low, to the detriment of comfort and of the vehicle components life.

It should be noted that, according to the go-kart rules, the go-kart cannot have electronic or electrical devices, as is possible instead in other categories of race vehicles or in normal motor vehicles.

It is an object of the present invention to provide an auxiliary device for a sport vehicle, such as a go-kart and the like, which allows a gear change during the acceleration phase without the necessity of any deceleration of the engine.

Another object of the present invention is to provide an auxiliary device for said gear change which allows, at the same time, the use of a traditional gear change system without clutch release during the race.

It is a further object of the present invention to provide an auxiliary device for the gear change that is extremely simple and does not comprise sophisticated electronic or electrical devices.

Moreover, it is an object of the invention to provide a gear change method during the acceleration phase without the need of any deceleration of the motor for a sport vehicle, such as a go-kart and the like.

These and other objects are achieved by the auxiliary device for the gear change according to the present invention, which can be used on a sport vehicle having a gear lever connected to a gearbox, an engine connected to transmission means through the gearbox and to clutch means, whose characteristic is to comprise:
- first and second pulling means, connected respectively to manual drive means and to the clutch of the vehicle,
- quick release means interposed between said first and second pulling means, and
- control means of said quick release means, said quick release means and said manual drive means being connected to the gear lever.

Preferably, said quick release means comprises:
- a moving element fixed to said first pulling means;
- a connection rod slidingly engaging with said moving element and connected to the second pulling means, and
- a locking element releasably engaging with said connection rod and moved by said control means, resilient return means of the locking element being provided for.

Always preferably, the moving element, the connection rod and the locking element slidingly engage with a guide box, means being provided of elastic return of the moving element with respect to the guide box .

The first and second pulling means may comprise flexible transmission cables, or, alternatively, hydraulic transmission means.

More in a generalised manner, the method for the gear change on which said device is based comprises the steps of:
- manually operating the clutch by means of first and second pulling means connected in series to each other, in parallel to the normal clutch cable of the vehicle;
- operating the gear lever and at the same time carrying out the temporary release between said first and second pulling means;
- connecting again said first and second pulling means in the course of the operation of said gear lever during the gear change.

Further characteristics and advantages of the auxiliary device according to the invention will be made clearer with the following, but not limitative, exemplifying description with reference to the attached drawings, wherein:
- figure 1 shows a perspective diagrammatic and partial view of a gear change of a go-kart having the device according to the invention;
- figure 2 shows a top plan cross sectional view of a release guide box of the device according to the invention;
- figures 3 and 4 show the guide box of figure 2 in two different working positions;
- figure 5 shows a detailed view of an different hydraulic embodiment of the guide box according to the invention.

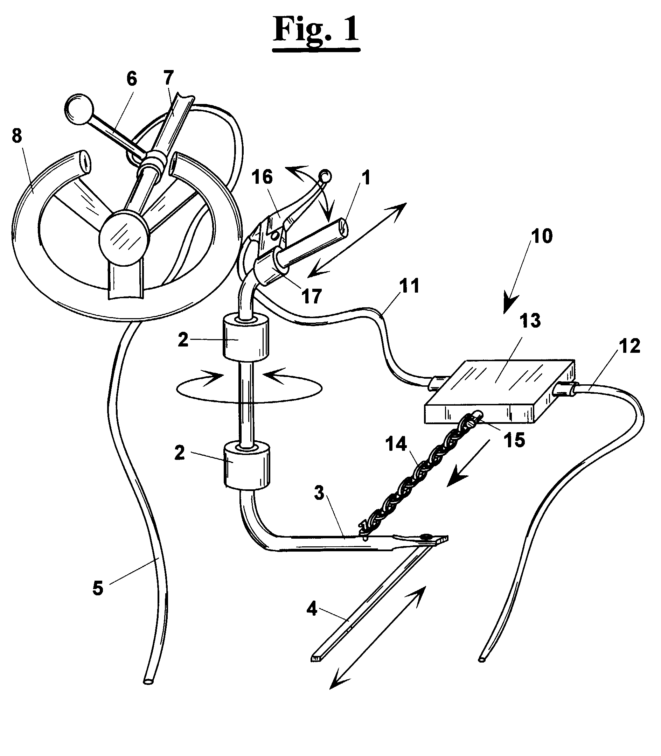

With reference to figure 1, a sport vehicle, such as in particular a go-kart, comprises, as known, a gear lever 1 pivotally connected to the chassis (not shown) through hinges 2 having vertical axis. Lever 1 has at its base an arm 3 whose rotation in a substantially horizontal plan drags the end of a connecting rod 4 whose other end, not shown, is connected to the gearbox. In order to carry out the start of the go-kart, a clutch cable 5, operated by a lever 6 mounted on the steering axle 7 of the steering wheel 8, is provided for connected to the clutch, not shown.

Apart from the start phase, clutch lever 6 is not used by the pilot, who carries out the gear change directly through the gear lever 1 and, at the same time, shortly decelerating the engine by releasing the accelerator pedal (not shown) slightly in advance with respect to the rotation of lever 1.

Without this speed reduction, the gear change in phase of acceleration is almost impossible, since with the only torque of lever 1 through connecting rod 4 the meshing gears are not disengageable, unless forces capable of breaking the gear component are used.

The gear change while accelerating is carried out rotating lever 1 clockwise and then counter-clockwise, whereas while decelerating it is the counter-clockwise rotation which comes first. Between a change phase and the successive one gear lever 1 is maintained in the rest position illustrated in figure 1.

According to the present invention an auxiliary device 10 is provided for to allow the gear change without carrying out any deceleration of the vehicle, or speed reduction of the engine, always maintaining the vehicle in continuous acceleration.

Device 10 comprises a first and a second pulling cable, respectively 11 and 12, connected to each other by means of a guide box 13, operable by means of a drive chain 14, stretched between a locking element 15, in sliding relationship with respect to guide box 13, and horizontal arm 3 of gear lever 1.

First pulling cable 11 is manually operable by means of a lever 16 mounted on the gear lever 1 by means of a sleeve 17, to which it is hinged. Second pulling cable 12, instead, is directly connected to the clutch in parallel with respect to cable 5. It is to be noted that in figure 1, for simplicity, with 5, 11 and 12 the sheaths of the respective pulling cables sliding inside them have been indicated.

During the acceleration phase, every time that the pilot wants to carry out a gear change, he may operate lever 1 in two ways:
- either in a traditional way, rotating clockwise lever 1 in synchronism to a deceleration, that is reducing shortly the speed of the engine, or
- according to the present invention, pulling the clutch through lever 16, since cables 11 and 12 connected to each other allow it.

In the second case, when the clutch is completely pulled, that is when lever 16 becomes parallel to gear lever 1, the latter rotates free for a short time, since, in that meantime, the gears of the gearbox are easily disengageable.

The clockwise rotation of gear lever 1 causes not only the movement of connecting rod 4 but also the pull of chain 14, which operates locking element 15 of guide box 13, thus releasing cables 11 and 12 with respect to each other, in the way described in detail hereinafter. The resilient means connected to the clutch, therefore, immediately allow its return in back mesh with the engine, after that the gear change has occurred. The return of the gear lever 1 in the rest position releases locking element 15 back to lock again cables 11 and 12 to each other, restoring the normal condition.

If the pilot wishes to carry out a gear change in the traditional way, that is with the technique of reducing the engine speed, the rotation of gear lever 1 without that lever 16 is moved pulls chain 14 and withdraws locking element 15. However, pulling cables 11 and 12 are not stretched and remain where they are, allowing a absolutely normal gear change.

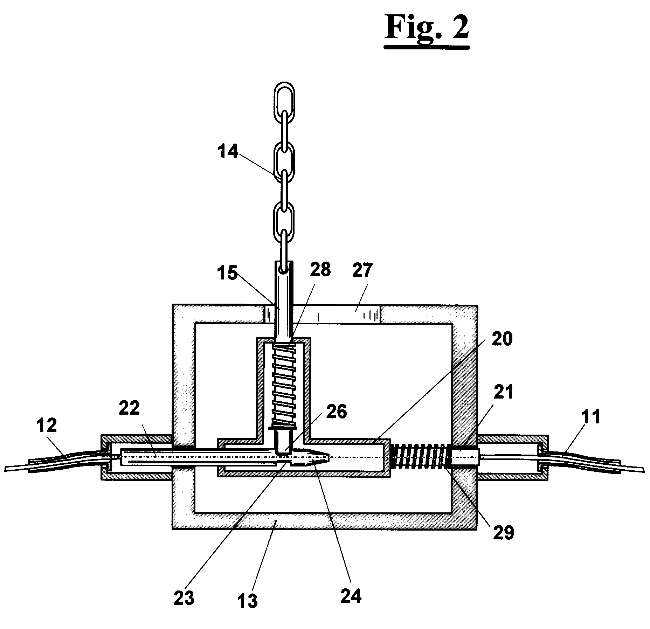

With reference to figures 2, 3 and 4, a preferred embodiment of the guide box 13 is shown. It comprises a moving element 20, integral to first pulling cable 11 and having a guide rod 21 which slidingly engages in the body of box 13. Coaxially to guide rod 21 a connection rod 22 is provided for, integral to pulling cable 12 and slidingly engaging with both box 13 and moving element 20. Connection rod 22 has, moreover, a circular groove 23 and a tapered end 24. Also with moving element 20 a locking element 15 slidingly engages, orthogonally to connection rod 22. One end of locking element 15 has a tooth 26 which engages with groove 23, whereas the other end is connected to chain 14. Locking element 15 can, moreover, slide in a elongated opening 27 made in box 13. Both guide rod 21 and locking element 15 comprise spring loaded means 28 and 29.

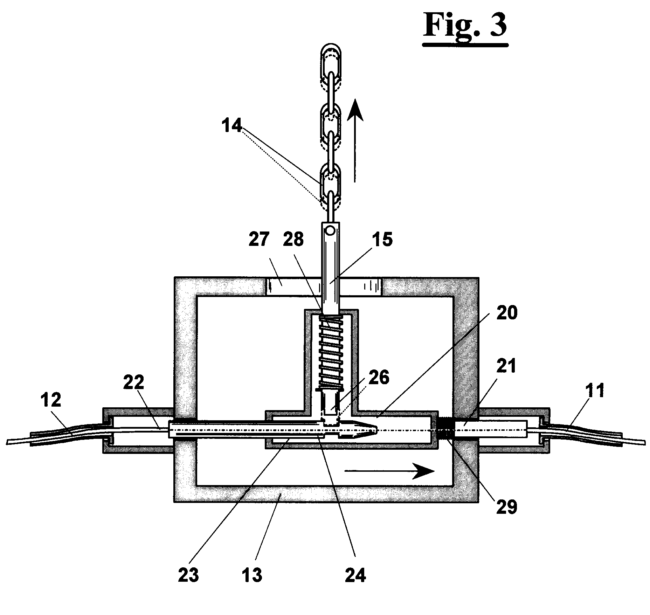

With reference to figure 3, when lever 16 of figure 1 is pulled, first cable 11 drags moving element 20 taking together also both connection rod 22 and locking element 15, thus withdrawing the clutch away from the engine through second cable 12. Then, moving element 20 reaches the position of maximum span of figure 3 along with the complete separation of the clutch from the engine, thus allowing the rotation of the gear lever 1. At the same time, arm 3, which operates the gearbox, carries out also the pull of chain 14, that withdraws locking element 15, and, suddenly, releases connection rod 22 that lets instantaneously the clutch to engage back with the engine.

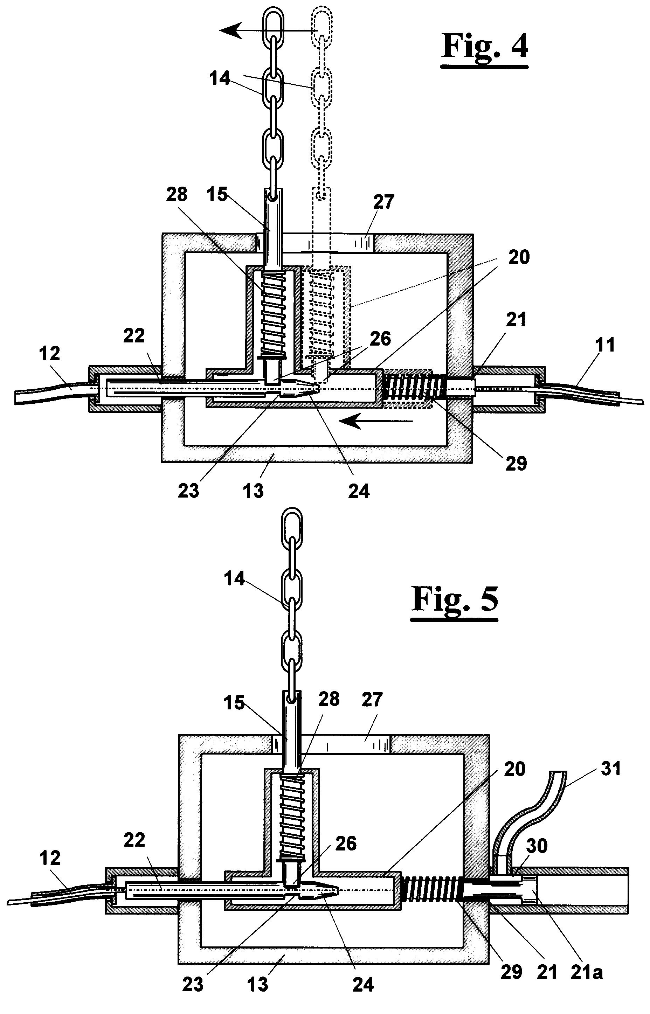

The actual separation of the clutch from the motor has lasted, therefore, the minimum time necessary to pull lever 16 of figure 1, without that the pedal of the gas has been moved back. It must be noted that the release time of lever 16 does not affect the return of the clutch in the mesh position, and it can be done also slowly. In fact, the release of lever the 16 in the position of figure 1 involves the return of moving element 20 in the initial position shown in figure 4, whereas connection rod 22 has reached back the rest position before, that is in the same moment in which locking element 15 has been withdrawn.

Although reference has been made to pulling cables 11 e 12 and to a chain 14, it is obvious for a skilled man to use equivalent actuator means, such as hydraulic means, as known in the field of motor vehicles. Of course, the operation of the device by means of flexible pulling cables and chain is cheaper and more convenient since it needs less maintenance effort with respect to hydraulic means.

However, with reference to figure 5, an embodiment of hydraulic pulling means of the moving element 20 has a guide rod 21 having a piston 21a, pushed by pressurised liquid 30 present in a flexible tube 31 communicating at its other end with a piston operated by lever 16.

Finally, although reference has been made only to non electrical or non electronic devices, it is no excluded that the locking element 15, instead by a chain or hydraulic means is withdrawn by electromechanical or electronic drives, even if the actuating elements 11 or 21of the moving element 20 are maintained mechanic or hydraulic.

## Claims

1. Auxiliary device for the gear change in a sport vehicle such as a go-kart and the like, said vehicle having a gear lever (1) connected to a gearbox, an engine connected to transmission means through the gearbox and a clutch means (5) **characterised in that** it comprises:
- first and second pulling means (11,12), connected respectively to manual drive means (16) and to said clutch
- quick release means (13) interposed between said first and second pulling means, and
- control means (14,15) of said quick release means, said quick release means being connected to the gear lever.

2. Auxiliary device according to claim 1, wherein both said control means (14,15) and said manual drive means (16) are connected to said gear lever (1).

3. Auxiliary device according to claims 1 and 2, wherein said quick release means (13) comprises:
- a moving element (20) fixed to said first pulling means (11);
- a connection rod (22) slidingly engaging with said moving element (20) and connected to the second pulling means (12), and
- a locking element (15) releasably engaging with said connection rod (22) and moved by said control means (14).

4. Auxiliary device according to the previous claims, wherein, said moving element (20), said connection rod (22) and said locking element (15) slidingly engage with a guide box.

5. Auxiliary device according to claim 4, wherein resilient return means (28,29) of the moving element (20) (20) and of said locking element (15) with respect to said guide box (13) are provided for.

6. Auxiliary device according to the previous claims, wherein, said first and second pulling means (11,12) comprise flexible transmission cables and said control means comprise a chain (14).

7. Auxiliary device according to claims 1 to 5, wherein, said first and second pulling means comprise hydraulic transmission means (21,21a,30,31).

8. Auxiliary device according to claim 7, wherein said moving element (20) has a guide rod (21) having a piston (21a) pushed by pressurised liquid (30) present in a flexible tube (31) communicating at its other end with a piston operated by said manual drive means (16).

9. Auxiliary device according to claims 1 to 5, wherein, said control means comprise electromechanical means operated by said gear lever.

10. Method for the gear change in a sport vehicle such as a go-kart and the like, said vehicle having a gear lever (1) connected to a gearbox, an engine connected to transmission means through the gearbox and a clutch means (5) **characterised in that** it comprises the steps of
- manually operating (16) the clutch by means of first and second pulling means (11,12) connected in series to each other, in parallel to the normal clutch cable (5) of the vehicle,
- carrying out the release between said first (11) and second (12) pulling means
- carrying out the release at the same time of the operation of said gear lever (1);
- connecting again said first and second pulling means (11,12) in the course of the operation of said gear lever (1).
